# EUROPÄISCHE PATENTSCHRIFT

(11) **EP 0 491 978 B1**
(45) Veröffentlichungstag und Bekanntmachung des Hinweises auf die Patenterteilung: **21.09.1994**
(21) Anmeldenummer: 90125324.5
(22) Anmeldetag: 22.12.1990
(51) Int. Cl.: F02F 1/20, F16J 10/04

(54) **Zylinderblock für eine Brennkraftmaschine**
Cylinder block for internal combustion engine
Bloc cylindre pour moteur à explosion

(43) Veröffentlichungstag der Anmeldung: 01.07.1992
(73) Patentinhaber: AUDI AG, 85045 Ingolstadt (DE)
(72) Erfinder: Lindner, Horst, W-8070 Ingolstadt (DE); Heck, Klaus, Dr., W-8070 Ingolstadt (DE)

(56) Entgegenhaltungen:
- DE-C- 3 238 440
- US-A- 2 085 976
- PATENT ABSTRACTS OF JAPAN vol. 5, no. 123 (M-82)(795) 08 August 1981, & JP-A-59 60841 (NIPPON KURINENJIN KENKYUSHO K.K) 26 Mai 1981

## Beschreibung

Die Erfindung betrifft einen Zylinderblock aus einer Metall-Legierung für eine Brennkraftmaschine, gemäß dem Oberbegriff des Patentanspruches 1.

Ein derartiger Zylinderblock ist beispielsweise in dem japanischen Patentabstrakt 56-60 841 (A) gezeigt. Dabei ist eine mit Bohrungen versehene Hülse aus Gußeisen im Druckgußverfahren in den Leichtmetall-Zylinderblock eingegossen. Die relativ dickwandige Hülse bildet eine verschleißfeste Zylinderlaufbahn, deren Wärmeleitfähigkeit durch die in die Bohrungen eingegossenen Leichtmetallnoppen, die Laufflächenanteile bilden, verbessert ist.

Aufgabe der Erfindung ist es, einen Zylinderblock der gattungsgemäßen Art zu schaffen, der hinsichtlich des Gewichtes, seiner Wärmeleitfähigkeit und der tribologischen Eigenschaften seiner Zylinderlaufflächen verbessert ist. Ferner ist es Aufgabe der Erfindung, ein Verfahren zur rationellen Herstellung dieses Zylinderblockes anzugeben.

Die Lösung der erstgenannten Teilaufgabe ist im Kennzeichen des Patentanspruches 1 angeführt.

Erfindungsgemäß ist die Hülse ähnlich einem Netz oder Gitter ausgebildet, welches beim Gießen, insbesondere im Druckgußverfahren, innig in das Grundmaterial eingebettet wird. Dabei sind durch die Hinterschneidungen gemäß Patentanspruch 2 Abschnitte der Durchstellungen vollkommen im Grundmaterial verankert, so daß keine "Laufbüchse" im herkömmlichen Sinne (wie beim eingangs erwähnten japanischen Patentabstrakt) vorliegt, sondern eine in das Grundmaterial eingebundene Verstärkung mit Laufflächenanteilen geschaffen ist. Durch die thermische Beschichtung der Hülse vor dem Eingießen wird zweierlei erreicht.

Zunächst stellt die Beschichtung die Korrosionsbeständigkeit der Hülse bis zu deren Eingießen sicher und verbessert gezielt tribologische Eigenschaften der Zylinderlauffläche. Ferner wird durch die Rauhigkeit bzw. die Porosität entsprechend Patentanspruch 3 der Beschichtung eine verbesserte stoffschlüssige Verbindung zwischen Hülse und Grundmaterial hergestellt. Nach der Fertigbearbeitung der Zylinderlauffläche (Bohren und Honen), bei der zum Teil die Beschichtung freigelegt wird, sorgen die porösen Laufflächenanteile für eine erhöhte Verschleißfestigkeit bei einem stabil haftenden Schmierfilm. Die Wärmeleitfähigkeit ist gegenüber einer Leichtmetall-Zylinderlauffläche (z. B. aus einer übereutektischen Aluminium-Silizium-Legierung) nur unwesentlich beeinträchtigt.

Die Hülse besteht gemäß Anspruch 4 bevorzugt aus einem Stahlblech, welches nach dem Herstellen der Durchstellungen zylindrisch geformt und z. B. durch elektrisches Widerstandsschweißen etc. an der Stoßstelle verbunden wird. Daraus resultiert eine kostengünstige Fertigung, insbesondere Großserienfertigung.

Die Durchstellungen, die grundsätzlich viele geometrische Formen (z. b. kraterförmig) aufweisen können, sind bevorzugt lamellenförmig ausgebildet, die sich sowohl hinsichtlich der aufzubringenden Beschichtung als auch bei der Eingießfähigkeit als besonders geeignet erwiesen haben. Bevorzugt wird entsprechend den Merkmalen der Ansprüche 6 - 8 eine Hülse der definierten Wandstärke und mit einer Anordnung der Lamellen in der angegebenen Geometrie vorgeschlagen. Dabei wird den baulichen Zwängen insbesondere bei Reihen-Hubkolben-Brennkraftmaschinen Rechnung getragen, insbesondere aber eine bevorzugte Laufflächenstruktur geschaffen, die sich sowohl tribologisch als auch von der BearbeitungsSeite (Bohren, Honen) als besonders geeignet erwiesen hat.

Die thermische Beschichtung kann durch Pulverbeschichten mit Karbid, Nitrid oder Borid bildendem, besonders verschleißfestem Werkzeugstahl, gemäß den Merkmalen der Ansprüche 9 und 10 je nach Laufflächenbeanspruchung (z. B. Diesel- oder Ottoverfahren, Aufladung etc.) durch ledeburitisch (weiß) erstarrtes Gußeisen oder bei geringerer Beanspruchung durch eine übereutektische Aluminium-Silizium-Schicht oder gemäß Anspruch 11 aus Keramik gebildet sein. Diese gegebenenfalls durch Plasmabeschichten mit Drahtzuführung oder Pulverzuführung herstellbaren Beschichtungen sind hinsichtlich der gewünschten Porosität, der Werkstoffausnutzung etc. gut steuerbar, relativ kostengünstig und haben sich hinsichtlich ihrer Laufeigenschaften und Verschleißfestigkeit als besonders geeignet herausgestellt.

Für thermisch hoch beanspruchte Maschinen kann als Matrixmaterial bzw. Basismaterial des Zylinderblockes eine Graugußlegierung verwendet werden. Es hat sich gezeigt, daß sich die Hülse als Laufbahnverstärkung auch hervorragend für aus Grauguß gegossene Zylinderblöcke eignet. Gegebenenfalls kann dabei die Hülse nur teilweise die Laufbahn verstärken und zwar im oberen Umkehrbereich der Kolbenringe des den Gleitpartner der Laufbahn bildenden Kolbens.

Als besonders geeignet hat sich gemäß Anspruch 13 eine Beschichtung gezeigt, die durch Eisen oder Stahl in Verbindung mit Eisenoxid gebildet ist. Diese besonders verschleißfeste Beschichtung läßt sich in Verbindung beispielsweise mit dem Flammspritzen problemlos aufbringen, wobei die gewünschte Porosität auch in der Massenfertigung gut beherrschbar ist. Die Porosität ist durch weitere Verfahrensparameter wie Trägergas (bei Pulverbeschichtung) und Abstand der Beschichtungsdüse gezielt beeinflußbar.

Ferner hat es sich als vorteilhaft erwiesen, wenn der Beschichtung gemäß den Merkmalen der Ansprüche 14 bis 16 Verbindungen mit selbstschmierenden Eigenschaften zugemischt werden. Diese Verbindungen verbessern wesentlich das Einlaufverhalten der Maschine und bewirken nach dem Einlaufen eine Laufbahnstruktur mit schmierölhaltenden Vertiefungen.

Schließlich können gemäß den Merkmalen der Ansprüche 17 und 18 als letzte Schicht bei der thermischen Beschichtung ein Flußmittel oder ein eine hohe Affinität zum Matrixmaterial aufweisende Legierung aufgebracht werden, die beim späteren Eingießen der Hülse in den Zylinderblock eine stoffschlüssige, innige Verbindung gewährleisten.

Die verfahrensgemäße Aufgabe der Erfindung wird mit den Merkmalen des Patentanspruches 19 gelöst. Vorteilhafte und zweckmäßige Weiterbildungen sind den weiteren Ansprüchen entnehmbar.

Erfindungsgemäß wird also vorgeschlagen, die Hülse nach dem thermischen Beschichten in eine Gießform für den Zylinderblock einzulegen, zu justieren und unmittelbar einzugießen. Die Justierung muß dabei so sein, daß sich die nicht sehr stabile Hülse beim Gießen nicht verlagern kann.

Ferner wird vorgeschlagen, bei Verwendung von Leichtmetall eine Aluminiumlegierung mit einem Siliziumgehalt < 14 %, insbesondere ca. 10 % zu verwenden, die eine leichte spanende Bearbeitbarkeit des gesamten Zylinderblockes ermöglicht, wobei die Verschleißbeständigkeit der Zylinderlaufflächen und deren tribologische Eigenschaften durch die eingesetzte, beschichtete Hülse bestimmt wird. Zum Gießen des vorgeschlagenen Zylinderblockes wird das Druckgußverfahren vorgeschlagen, bei dem neben den bekannten Fertigungsvorteilen eine besonders innige und homogene Einbindung der Hülse in das Grundmaterial sichergestellt ist.

Als besonders zweckmäßig hat es sich dabei erwiesen, die Zylinderlaufbahnen im letzten Arbeitsgang einem Bürsthonen zu unterziehen, bei dem die "weicheren" Leichtmetall-Laufflächenanteile geringfügig zurückgesetzt werden und somit zusätzliche Taschen für einen stabilen Schmierfilm auf der Lauffläche bilden. Ferner wird damit einem Überschmieren vom Grundmaterial auf die tragenden, verschleißfesten Laufflächenanteile bei örtlichen Überhitzungen etc. entgegengewirkt.

Schließlich kann es bei hohen Anforderungen an die Zylinderlaufflächen angezeigt sein, Grauguß als Basismaterial zu verwenden und/oder nach dem Eingießen der Hülse und einer ersten mechanischen Bearbeitung, jedoch vor dem Honen die Zylinderlauffläche zumindest partiell aufzuschmelzen, um intermetallische Verbindungen aus der Hülse, der Beschichtung und dem Grundmaterial zu bilden. Derartige Laufflächen, die jedoch eine entsprechend aufwendige Bearbeitung hervorrufen, sind hinsichtlich ihrer Korrosions- und Verschleißbeständigkeit für höchste Ansprüche geeignet. Als Energiequelle für das Aufschmelzen kommt insbesondere der Laser in Betracht, mit dem es mit relativ geringem Aufwand möglich ist, Oberflächen auch nur in Mikrometerbereich aufzuschmelzen.

Ausführungsbeispiele der Erfindung sind im folgenden mit weiteren Einzelheiten näher erläutert. Die schematische Zeichnung zeigt in
- **Fig. 1**: eine Draufsicht auf einen nur abschnittsweise dargestellten Zylinderblock einer Mehrzylinder-Hubkolben-Brennkraftmaschine mit eingegossenen Hülsen;
- **Fig. 2**: eine entsprechende Hülse aus Stahlblech in raumbildlicher Darstellung;
- **Fig. 3**: eine teilweise stirnseitige Ansicht der Hülse nach Fig. 2;
- **Fig. 4**: eine teilweise Draufsicht auf die Innenumfangsfläche der Hülse nach Fig. 2; und
- **Fig. 5**: einen Querschnitt des Zylinderblockes entlang der Linie VI-VI der Fig. 1; und
- **Fig. 6**: eine Einzelheit Z aus Fig. 3 der beschichteten Lauffläche.

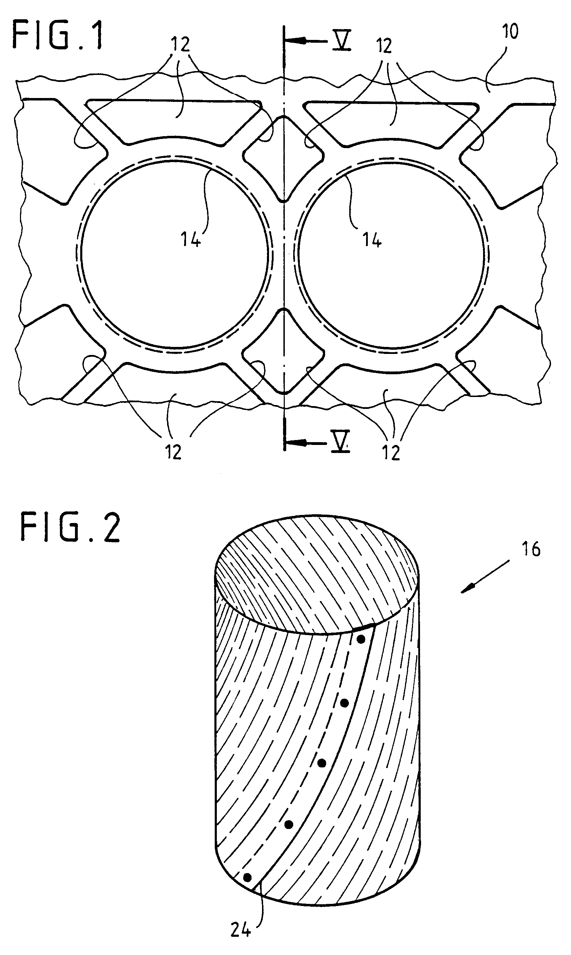

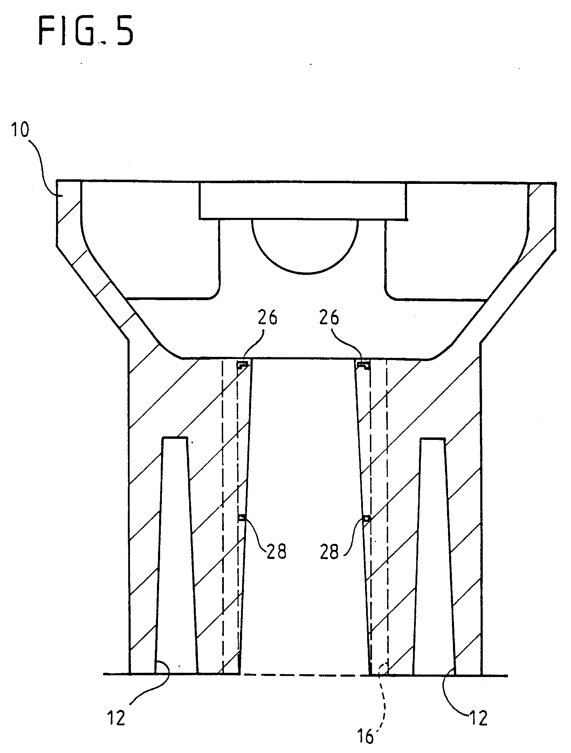

Die Figuren 1 und 5 zeigen teilweise einen Zylinderblock 10 einer Mehrzylinder-Hubkolben-Brennkraftmaschine mit Flüssigkeitskühlung mit einheitlich mit 12 bezeichneten Kühlkanälen und mehreren Zylinderlaufbahnen 14. Der Zylinderblock 10 ist im Druckgußverfahren aus einer Aluminium-Silizium-Legierung mit 10 % Siliziumgehalt hergestellt.

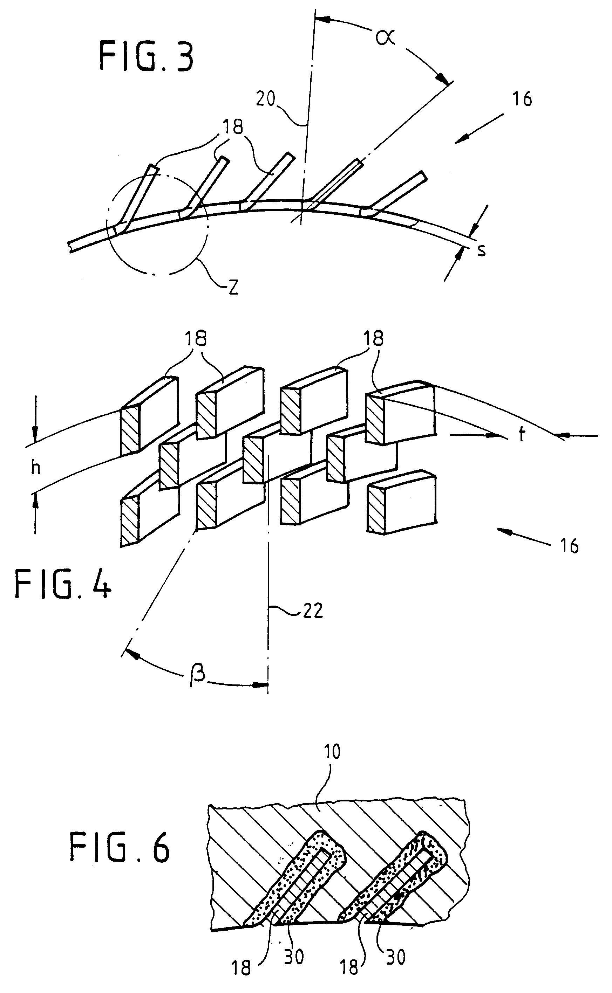

In den Zylinderblock 10 ist je Zylinder eine perforierte Hülse 16 eingegossen (vgl. Figuren 2 bis 4), die aus Stahlblech mit einer Wandstärke s von 1 mm hergestellt ist. Die Hülse 16 ist mit Durchstellungen bzw. Lamellen 18 versehen, die in einem Winkel α von 45° zur Radialrichtung (Linie 20 der Fig. 3) nach außen durchgestellt sind. Die Durchstelltiefe t der Lamellen 18 beträgt ca. 3 mm und deren Höhe h 10 mm. Die Lamellen 18 sind schräg zur Zylinderachse 22 zueinander versetzt (Winkel β).

Das Durchstellen der Lamellen 18 erfolgt an einem durchgehend zugeführten Stahlblechstreifen, der anschließend abgelängt, rohrförmig gebogen und mit einer schräg zur Zylinderachse 22 verlaufenden Stoßstelle 24 durch Punktschweißen zu der zylinderförmig geschlossenen Hülse 16 verarbeitet wird.

Anschließend wird die Hülse 16 durch Sandbestrahlung gereinigt, aufgerauht und durch thermisches Spritzen mit einer porösen Beschichtung 30 aus ledeburitisch erstarrtem Gußeisen versehen.

Das Beschichten in einer Stärke von ca. 0,3 mm wird bewerkstelligt im Flammspritzverfahren und unter Zuführung eines Grauguß-Pulvers der Körnung von 0,05 bis 0,25 mm, welches in bekannter Weise im schmelzflüssigen Zustand auf die gekühlte Hülse 16 geblasen wird. Durch die gewählte Körnung wird die Porosität der Beschichtung eingestellt. Aufgrund der schnellen Erstarrung entsteht eine ledeburitische Schicht hoher Verschleißfestigkeit. Wie die Fig. 6 in vergrößerter Darstellung zeigt, ist die poröse Beschichtung 30 die Lamellen 18 umschließend aufgespritzt. Nach dem Eingießen der Hülse 16 sind Lamellen und Beschichtung stoffschlüssig in das Grundmaterial 10 eingebettet, sind jedoch an der Lauffläche 14 (nach deren mechanischer Bearbeitung) freigelegt.

An die Hülsen 16 sind Abstandshalter 26,28 angeformt (vgl. Fig. 5), die die Hülsen 16 in der Druckgußform (nicht dargestellt) justieren, so daß eine leicht konische (Gußschräge!) Zylinderform wie in der Fig. 5 ersichtlich gießbar ist. Dabei werden die Zwischenräume zwischen den Lamellen 18 mit der Aluminiumlegierung ausgefüllt bzw. die Lamellen 18 im Grundmaterial eingebettet und verankert. Der Gußrohling wird dann mechanisch bearbeitet, wobei unter anderem zur Schaffung der Zylinderlaufflächen 14 die Zylinder gebohrt und gehont werden. Die Hülsen 16 sind maßlich so ausgelegt, daß sie teilweise freigelegt werden, wobei die in der Fig. 2 schraffiert dargestellten Flächen tragende Lauf-flächenanteile bilden, die teils die verschleißfeste Beschichtung tragen und teils von dieser Beschichtung umgrenzt sind. Diese verschleißfesten Flächen wechseln ab mit Flächen, die vom Grundmaterial gebildet sind (vgl. wiederum Fig. 6).

Um die vom Grundmaterial gebildeten Flächen geringfügig zurückzusetzen, erfolgt als letzter Arbeitsgang an den Zylinderlaufflächen 14 ein Bürsthonen, bei dem nur noch das weniger harte Grundmaterial im Mikrometerbereich abgetragen wird.

Die Erfindung ist nicht auf das dargestellte Ausführungsbeispiel beschränkt. Insbesondere kann die Gestaltung der Durchstellungen so erfolgen, daß die tragenden Flächenanteile erhöht oder in einem anderen Flächenmuster vorliegen. Als thermische Beschichtung kann ferner eine übereutektische Aluminium-Silizium-Legierung, eine karbidbildende Beschichtung, eine Eisenlegierung etc. aufgebracht sein. Schließlich kann die Lauffläche 14 vor dem Honen auch durch Aufschmelzen mittels eines Lasers veredelt werden, wobei aus den verwendeten Materialien intermetallische Phasen gebildet werden.

In einem weiteren Ausführungsbeispiel wurde der Zylinderblock einer Brennkraftmaschine mit je Zylinderlaufbahn einer wie vorstehend beschriebenen Hülse mit einer Graugußlegierung hergestellt. Die Beschichtung der Hülse aus Stahlblech erfolgte im Flammspritzverfahren mit sauerstoffhaltigem Treibmittel, wobei die Beschichtung aus Stahl- und Eisenoxidanteilen bestand und nur eine geringfügige Porosität aufwies.

Zur Verbesserung der tribologischen Eigenschaften der Lauffläche wurde ferner in die Beschichtung Bornitrid in einem Volumenanteil von 10 % eingespritzt. Gute Ergebnisse können jedoch auch mit den Schmierstoffen Graphit oder MoS₂ erreicht werden.

Bei einem dritten Ausführungsbeispiel mit einem Zylinderblock aus Leichtmetall und einer wie vorstehend beschriebenen Beschichtung der Hülse durch thermisches Spritzen (Flammspritzverfahren) aus lediburitisch erstarrtem Gußeisen wurde als zweite, darüberliegende Schicht eine Al-Bronze (Al-SN) mit einem Schmelzpunkt < 500° C aufgebracht, die bei einem späterem Umgießen der Hülse mit der Leichtmetall-Matrix eine stoffschlüssige, intermetallische Verbindung sicherstellt.

## Patentansprüche

1. Zylinderblock aus einer Metallegierung für eine Brennkraftmaschine, bei dem in eine jede Zylinderlaufbahn eine perforierte Hülse aus einem verschleißbeständigem, einen höheren Schmelzpunkt aufweisenden Material eingegossen ist, die Laufbahnanteile bildet, **dadurch gekennzeichnet**, daß die Hülse (16) aus einem dünnwandigem, durch Durchstellen perforiertem Blech besteht und die Durchstellungen bzw. Lamellen (18) mit einer durch thermisches Spritzen aufgebrachten Schicht versehen sind.

2. Zylinderblock nach Anspruch 1, **dadurch gekennzeichnet**, daß die Durchstellungen bzw. Lamellen (18) eine von der Laufbahnkrümmung abweichende, Hinterschneidungen zum Grundmaterial bildende Ausrichtung haben.

3. Zylinderblock nach den Ansprüchen 1 und 2, **dadurch gekennzeichnet**, daß die aufgebrachte Schicht eine gezielte Porösität aufweist.

4. Zylinderblock nach einem oder mehreren der Ansprüche 1 - 3, **dadurch gekennzeichnet**, daß die Hülse (16) aus Stahlblech besteht und an einer schräg zur Zylinderachse verlaufenden Stoßstelle (24) verschweißt ist.

5. Zylinderblock nach einem oder mehreren der vorhergehenden Ansprüche **dadurch gekennzeichnet**, daß die Durchstellungen durch schräg zur Zylinderachse (Winkel β) verlaufende Lamellen 18 gebildet sind.

6. Zylinderblock nach einem oder mehreren der vorhergehenden Ansprüche, **dadurch gekennzeichnet**, daß die Hülse (16) eine Wandstärke s zwischen 0,4 bis 1,5 mm aufweist.

7. Zylinderblock nach den Ansprüchen 5 und 6, **dadurch gekennzeichnet**, daß die Lamellen (18) der Hülse (16) eine Durchstellungstiefe t von 1 - 5 mm, insbesondere ca. 3 mm besitzen.

8. Zylinderblock nach Anspruch 7, **dadurch gekennzeichnet**, daß der Winkel α der Lamellen (18) zur Zylinder-Radialrichtung 5° bis 75°, insbesondere zwischen 30° - 60° beträgt.

9. Zylinderblock nach einem oder mehreren der vorhergehenden Ansprüche, **dadurch gekennzeichnet**, daß die thermisch aufgebrachte Schicht durch ledeburitisch erstarrtes Gußeisen gebildet ist.

10. Zylinderblock nach einem oder mehreren der Ansprüche 1 bis 8**, dadurch gekennzeichnet**, daß die thermisch aufgebrachte Schicht eine übereutektische Al-Si-Legierung ist.

11. Zylinderblock nach einem oder mehreren der Ansprüche 1 - 8, **dadurch gekennzeichnet**, daß die thermische Beschichtung aus keramischen Bestandteilen, insbesondere Al₂ O₃, Ti O, oder Zr O₂ gebildet ist.

12. Zylinderblock nach einem oder mehreren der Ansprüche 1 - 8, **dadurch gekennzeichnet**, daß die thermische Beschichtung aus hochlegiertem Werkzeugstahl gebildet ist.

13. Zylinderblock nach einem oder mehreren der Ansprüche 1 - 8, **dadurch gekennzeichnet**, daß die thermische Beschichtung mit einer Mischung aus Eisen oder Stahl und Eisenoxid gebildet ist.

14. Zylinderblock nach einem oder mehreren der Ansprüche 9 - 13, **dadurch gekennzeichnet**, daß der Beschichtung Verbindungen mit selbstschmierenden Eigenschaften zugemischt sind.

15. Zylinderblock nach Anspruch 14, **dadurch gekennzeichnet**, daß die Verbindungen aus Graphit, MoS₂ und/oder Bornitrid bestehen.

16. Zylinderblock nach den Ansprüchen 14 und 15, **dadurch gekennzeich**net, daß die Volumenanteile der Verbindungen zwischen 3 bis 15 % betragen.

17. Zylinderblock nach einem oder mehreren der vorhergehenden Ansprüche, **dadurch gekennzeichnet**, daß auf die Beschichtung ein Flußmittel oder ein eine hohe Affinität zum Matrixmaterial aufweisende Legierung aufgebracht wird.

18. Zylinderblock nach Anspruch 17, **dadurch gekennzeichnet**, daß bei Aluminiumlegierungen als Matrixmaterial Al-Bronzen mit Schmelzpunkten < 500° C aufgebracht werden.

19. Verfahren zum Herstellen eines Zylinderblockes nach einem oder mehreren der vorhergehenden Ansprüche, **dadurch gekennzeichnet**,daß
a) je Zylinder eine durch Durchstellen perforierte Hülse (16) hergestellt wird,
b) diese Hülse und deren Durchstellungen bzw. Lamellen (18) mit einer Beschichtung durch thermisches Spritzen versehen wird,
c) die Hülse in eine Gießform für den Zylinderblock eingelegt und justiert wird, und
d) der Zylinderblock durch Zuführen einer schmelzflüssigen Legierung in die Gießform gegossen wird.

20. Verfahren nach Anspruch 19, **dadurch gekennzeichnet**, daß eine Al-Si-Legierung verwendet wird, deren Si-Gehalt < 14 %, insbesondere ca. 10 % beträgt.

21. Verfahren nach den Ansprüchen 19 und 20, **dadurch gekennzeichnet**, daß der Zylinderblock im Druckgießverfahren gegossen wird.

22. Verfahren nach den Ansprüchen 19 - 21, **dadurch gekennzeichnet**, daß die Zylinderlaufbahnen nach dem Gießen des Zylinderblockes spanend bearbeitet, gehont und schließlich einem Bürsthonen unterzogen werden.

23. Verfahren nach einem oder mehreren der vorhergehenden Ansprüche, **dadurch gekennzeichnet**, daß die Zylinderlauffläche vor dem Honen zumindest partiell aufgeschmolzen wird, um im Oberflächenbereich intermetallische Phasen aus dem Grundmaterial, der Hülse und der Beschichtung zu bilden.

## Claims

1. A cylinder block made of a metal alloy for an internal combustion engine, in which a perforated liner made of a wear-resistant material having a higher melting point is cast into each cylinder running face and which forms portions of the running face, characterised in that the liner (16) consists of a thin-walled metal sheet perforated by penetration and the penetrations or lamellas (18) are provided with a layer deposited by thermal spraying.

2. A cylinder block according to claim 1, characterised in that the penetrations or lamellas (18) have an alignment departing from the curvature of the running face and forming undercuts towards the base material.

3. A cylinder block according to claims 1 and 2, characterised in that the deposited layer has a targeted porosity.

4. A cylinder block according to one or more of claims 1 - 3, characterised in that the liner (16) consists of sheet steel and is welded at a joint location (24) running diagonally to the cylinder axis.

5. A cylinder block according to one or more of the preceding claims, characterised in that the penetrations are formed by lamellas (18) running diagonally to the cylinder axis (angle β).

6. A cylinder block according to one or more of the preceding claims, characterised in that the liner (16) has a wall thickness s between 0.4 and 1.5 mm.

7. A cylinder block according to claims 5 and 6, characterised in that the lamellas (18) of the liner (16) have a penetration depth t of 1 - 5 mm, particularly about 3 mm.

8. A cylinder block according to claim 7, characterised in that the angle α of the lamellas (18) to the radial direction of the cylinder is 5° to 75°, particularly between 30° -60°.

9. A cylinder block according to one or more of the preceding claims, characterised in that the thermally deposited layer is formed by ledeburitically solidified cast iron.

10. A cylinder block according to one or more of claims 1 to 8, characterised in that the thermally deposited layer is a hypereutectic Al-Si alloy.

11. A cylinder block according to one or more of claims 1 - 8, characterised in that the thermal coating is formed from ceramic components, particularly Al₂O₃, TiO or ZrO₂.

12. A cylinder block according to one or more of claims 1 - 8, characterised in that the thermal coating is formed from high-alloy tool steel.

13. A cylinder block according to one or more of claims 1 - 8, characterised in that the thermal coating is formed using a mixture of iron or steel and iron oxide.

14. A cylinder block according to one or more of claims 9 - 13, characterised in that compounds with self-lubricating properties are admixed with the coating.

15. A cylinder block according to claim 14, characterised in that the compounds consist of graphite, MoS₂ and/or boron nitride.

16. A cylinder block according to claims 14 and 15, characterised in that the volume fractions of the compounds are between 3 and 15 %.

17. A cylinder block according to one or more of the preceding claims, characterised in that a flux or an alloy with a high affinity for the matrix material is deposited on the coating.

18. A cylinder block according to claim 17, characterised in that when aluminium alloys are used as the matrix material Al bronzes with melting points < 500°C are deposited.

19. A process for manufacturing a cylinder block according to one or more of the preceding claims, characterised in that
a) a liner (16) perforated by penetration is manufactured for each cylinder,
b) this liner and its penetrations or lamellas (18) is provided with a coating by thermal spraying,
c) the liner is placed in a casting mould for the cylinder block and adjusted, and
d) the cylinder block is cast by feeding a molten alloy into the casting mould.

20. A process according to claim 19, characterised in that an Al-Si alloy is used, the Si content of which is < 14 %, particularly about 10 %.

21. A process according to claims 19 and 20, characterised in that the cylinder block is cast by the die-casting method.

22. A process according to claims 19 - 21, characterised in that after casting the cylinder block the cylinder running faces are machined with the removal of metal, honed, and finally subjected to brush-honing.

23. A process according to one or more of the preceding claims, characterised in that the cylinder running face is at least partially melted before honing, in order to form intermetallic phases in the surface region from the base material, the liner and the coating.

## Revendications

1. Bloc-cylindres en alliage métallique pour moteur à combustion interne, dans lequel il est inclus à la coulée, dans la surface de glissement de chaque cylindre, un manchon perforé qui est fait d'un matériau résistant à l'usure et présentant un point de fusion plus élevé, et qui constitue des parties de cette surface de glissement, caractérisé en ce que le manchon (16) est constitué par une tôle à paroi mince perforée par découpage, et en ce que les découpes ou lamelles (18) sont garnies d'une couche appliquée par pulvérisation à chaud.

2. Bloc-cylindres selon la revendication 1, caractérisé en ce que les découpes ou lamelles (18) ont une orientation qui s'écarte de la courbure de la surface de glissement et qui forme des contre-dépouilles par rapport au matériau de base.

3. Bloc-cylindres selon la revendication 1 ou 2, caractérisé en ce que la couche appliquée présente une porosité adéquate.

4. Bloc-cylindres selon l'une quelconque des revendications 1 à 3, caractérisé en ce que le manchon (16) est en tôle d'acier et est soudé en un joint (24) qui s'étend obliquement par rapport à l'axe du cylindre.

5. Bloc-cylindres selon l'une quelconque des revendications 1 à 4, caractérisé en ce que les découpes sont formées par des lamelles (18) qui s'étendent obliquement par rapport à l'axe du cylindre (angle β).

6. Bloc-cylindres selon l'une quelconque des revendications 1 à 5, caractérisé en ce que le manchon (16) présente une épaisseur de paroi (s) comprise entre 0,4 et 1,5 mm.

7. Bloc-cylindres selon la revendication 5 ou 6, caractérisé en ce que les lamelles (18) du manchon (16) ont une étendue en longueur de découpure (t) de 1 à 5 mm, en particulier d'environ 3 mm.

8. Bloc-cylindres selon la revendication 7, caractérisé en ce que l'angle α des lamelles (18) par rapport à la direction radiale du cylindre est de 5° à 75°, en particulier de 30° à 60°.

9. Bloc-cylindres selon l'une quelconque des revendications 1 à 8, caractérisé en ce que la couche appliquée à chaud est constituée par de la fonte de fer solidifiée à l'état de lédéburite.

10. Bloc-cylindres selon l'une quelconque des revendications 1 à 8, caractérisé en ce que la couche appliquée à chaud est un alliage Al-Si hypereutectique.

11. Bloc-cylindres selon l'une quelconque des revendications 1 à 8, caractérisé en ce que le revêtement thermique est constitué par des composants céramiques, en particulier Al₂O₃, TiO ou ZrO₂.

12. Bloc-cylindres selon l'une quelconque des revendications 1 à 8, caractérisé en ce que le revêtement thermique est constitué par de l'acier à outils fortement allié.

13. Bloc-cylindres selon l'une quelconque des revendications 1 à 8, caractérisé en ce que le revêtement thermique est formé avec un mélange de fer ou d'acier et d'oxyde de fer.

14. Bloc-cylindres selon l'une quelconque des revendications 9 à 13, caractérisé en ce que des composés ayant des propriétés autolubrifiantes sont mélangés au revêtement.

15. Bloc-cylindres selon la revendication 14, caractérisé en ce que les composés sont constitués par du graphite, MoS₂ et/ou du nitrure de bore.

16. Bloc-cylindres selon la revendication 14 ou 15, caractérisé en ce que les parties en volume des composés sont comprises entre 3 et 15%.

17. Bloc-cylindres selon l'une quelconque des revendications 1 à 16, caractérisé en ce qu'un fondant ou un alliage présentant une affinité élevée pour la matière de matrice est appliqué sur le revêtement.

18. Bloc-cylindres selon la revendication 17, caractérisé en ce que dans le cas où on utilise des alliages d'aluminium comme matière de matrice, des bronzes d'aluminium ayant des points de fusion <500°C sont appliqués.

19. Procédé de fabrication d'un bloc-cylindres selon l'une quelconque des revendications 1 à 18, caractérisé en ce que
a) un manchon (16) perforé par découpage est fabriqué pour chaque cylindre,
b) ce manchon et ses découpes ou lamelles (18) sont garnis d'un revêtement par pulvérisation à chaud,
c) le manchon est introduit et positionné dans un moule de coulée pour le bloc-cylindres, et
d) le bloc-cylindres est coulé par introduction, dans le moule de coulée, d'un alliage fondu à l'état liquide.

20. Procédé selon la revendication 19, caractérisé en ce qu'on utilise un alliage Al-Si dont la teneur en Si est inférieure à 14%, en particulier de l'ordre de 10%.

21. Procédé selon la revendication 19 ou 20, caractérisé en ce que le bloc-cylindres est coulé par le procédé de coulée sous pression.

22. Procédé selon l'une quelconque des revendications 19 à 21, caractérisé en ce qu'après la coulée du bloc-cylindres, les surfaces de glissement des cylindres sont usinées par enlèvement de matière, soumises à un pierrage et enfin polies à la brosse.

23. Procédé selon l'une quelconque des revendications 19 à 22, caractérisé en ce qu'avant le pierrage, les surfaces de glissement des cylindres sont fondues au moins partiellement, afin de former, dans la région superficielle, des phases intermétalliques de la matière de base, du manchon et du revêtement.
